# EUROPEAN PATENT SPECIFICATION

(11) **EP 3 935 092 B1**
(45) Date of publication and mention of the grant of the patent: **15.10.2025**
(21) Application number: 20714412.2
(22) Date of filing: 27.02.2020
(51) Int. Cl.: C08F 220/18, C09D 143/04

(54) **USE OF AQUEOUS COPOLYMER DISPERSIONS IN PRESERVATIVE-FREE AQUEOUS COATING COMPOSITIONS**
VERWENDUNG VON WÄSSRIGEN COPOLYMER-DISPERSIONEN IN PRÄSERVATIV-FREIEN WÄSSRIGEN BESCHICHTUNGSZUSAMMENSETZUNGEN
UTILISATION DE DISPERSIONS AQUEUSES DE COPOLYMÈRE DANS DES COMPOSITIONS DE REVÊTEMENT AQUEUX SANS CONSERVATEUR

(30) Priority: 06.03.2019 US 201962814479 P
(43) Date of publication of application: 12.01.2022
(73) Proprietor: Celanese International Corporation, Irving, TX 75039 (US)
(72) Inventor: JUNK, Matthias, 64665 Alsbach-Hähnlein (DE); FICHTNER, Thomas, 55278 Dalheim (DE); MOMPER, Bernhard, 65203 Wiesbaden (DE)
(74) Representative: Simmons & Simmons LLP (Munich)
(86) International application number: PCT/US2020/020149
(87) International publication number: WO 2020/180616

(56) References cited:
- WO-A1-2015/193192
- US-A1- 2002 040 096
- US-A1- 2011 184 088

## Description

### FIELD

The present invention relates to the use of aqueous copolymer dispersions in preservative-free coating compositions, especially matt interior paints having a pigment volume concentration (pvc) greater than 60%.

### BACKGROUND

Aqueous copolymer dispersions are well known as binders in the production of coating compositions such as plasters, renders, adhesives, and paints. Advantages of using waterborne systems for paints include low cost, ease of application and cleanup, and reduced drying times. However, to be acceptable to consumers, aqueous coating compositions must emulate the performance properties of their oil-based counterparts. It is therefore conventional to incorporate additives in aqueous copolymer dispersions and coating compositions that facilitate or impart desirable properties, such as better film coalescence, better resistance to blocking, better film durability, better physical and chemical abrasion resistance, and tougher coatings. For interior paints, where good mechanical properties at low binder content are required, wet scrub resistance (WSR) is a critical performance criterion. To date, many different proposals have been advanced to improve the wet scrub resistance of paints.

For example, US Patent No. 6,624,243 discloses a functionalized copolymer dispersion produced by polymerization of a monomer mixture consisting essentially of: a) one or more monomers selected from the group consisting of vinyl esters of unbranched or branched alkylcarboxylic acids having 1 to 15 carbon atoms, vinyl aromatics, olefins, dienes, and vinyl halides, b) from 0.05 to 5.0% by weight of one or more hydrolyzable silane monomers selected from the group consisting of ethylenically unsaturated, hydrolyzable silicon compounds, epoxysilanes, aminosilanes, and mercaptosilanes, c) from 0.05 to 5.0% by weight of one or more monomers selected from the group consisting of ethylenically unsaturated epoxide compounds, and d) from 0 to 2.0% by weight of one or more monomers selected from the group consisting of ethylenically unsaturated 1,3-dicarbonyl compounds. The polymer dispersion is said to impart very good wet abrasion resistance in a variety of paint formulations, for example in both silicate-rich and carbonate-rich formulations.

According to US Patent Application Publication No. 2018/0072912 further improvement in wet abrasion resistance can be achieved by the incorporation into the polymer dispersion of one or more ethylenically unsaturated polycarboxylic acids in addition to the hydrolyzable silane compound and an epoxide compound. Specifically, the '912 publication discloses an aqueous copolymer dispersion comprising at least one copolymer formed from a mixture comprising: (a) one or more main monomers selected from the group consisting of one or more vinyl esters of C₁-C₁₈ alkanoic acids, vinyl esters of aromatic acids, olefins, dienes, esters of ethylenically unsaturated carboxylic acids, vinylaromatics, and vinylhalogenides; (b) from 0.05 to 5%, preferably from 0.5 to 2%, by weight of one or more ethylenically unsaturated polycarboxylic acids or anhydrides thereof; (c) from 0.05 to 10%, preferably from 0.2 to 3%, by weight of one or more ethylenically unsaturated epoxy-containing compounds; and (d) from 0.05 to 5%, preferably from 0.1 to 3%, by weight of one or more hydrolyzable silicon compounds.

Due to environmental and health concerns, there has been a movement towards reducing the amount of volatile organic compounds (VOCs) in paints, stains, and other coating compositions, which evaporate into the environment upon film formation. Additives to coating compositions that facilitate or impart desirable properties can be one source of VOCs. The evaporation of VOCs often results in undesirable aromas, and exposure to such fumes, particularly in areas that are not well ventilated, remains a health concern. Thus, less volatile or non-volatile additives, as well as colorants, that impart comparable (or superior) properties to the paints have been used to replace higher VOC additives. The quest for low VOC paints or a better "green paint" is discussed in a New York Times newspaper article entitled "The Promise of Green Paint" (Kershaw, Sarah, The New York Times, May 15, 2008, p. F6).

The reduction of VOC in paints, stains and other coatings and in additives, however, has produced environmentally friendly paints that are more inviting to bacteria, algae, yeasts, fungi and other biological agents that thrive in an aqueous environment. These biological agents grow and die in paint cans and containers, and often impart an unpleasant odor and render paints unusable for its intended purpose, and can cause viscosity loss, discoloration, gassing, frothing, sedimentation and pH changes. Biological agents also present potential health issues. Certain biological agents, such as algae and molds, may grow on dried paint films covering walls or other substrates.

Biocides, particularly isothiazolinones, are therefore frequently added to aqueous paints and stains to control the growth of biological agents. Some of these biocides may remain on the dried paint film to control algae and molds. However, isothiazolinone-based biocides are known to cause allergic contact dermatitis and, in fact, among painters they are one of the most common causes of contact dermatitis. As a result, there is increasing publicity and regulation, especially in Europe, towards the reduction or elimination of biocides in paints and stains. This is turn has led to increasing interest in alternative methods of stabilizing paints against microbiological attack. One such method involves maintaining the paint at a sufficiently high pH value to inhibit microbial growth.

For example, EP1297079B1 discloses a preservative-free emulsion paint containing (a) 4-15 wt.% of polymer dispersion, calculated as the solids content, (b) 10-55 wt.% of pigment and/or filler and (c) a maximum of 2 wt.% of water-glass as an additive and contents of water to make up to 100 wt.%.

In addition, German Patent Application DE 10204013455 A1 discloses an emulsion paint containing (a) 2-30% of polymer dispersion, calculated as the solids content, (b) 10-60% of pigment and/or filler, (c) 0.5-5% of siliconate as an additive and contents of water to make up to 100 wt.%.

According to WO2015/193192, aqueous polymer dispersions obtainable by free-radical emulsion polymerization of a monomer mixture containing a) 30 to 70 parts by weight of at least one monomer whose homopolymer has a glass transition temperature Tg <25°C, b) 30 to 70 parts by weight at least one monomer whose homopolymer has a glass transition temperature Tg> 25°C, c) 0.1-5 parts by weight of at least one compound containing stabilizing groups, and d) 0.05-5 parts by weight of at least one copolymerizable monomer containing hydrolyzable silane groups exhibit improved wet abrasion resistance even when used in silicate-rich or water-glass-containing paint formulations having a pH greater than 10. Examples of suitable silane monomers disclosed in WO2015/193192 include siloxane-containing monomers, such as vinyltrialkoxysilanes, e.g.vinyltrimethoxysilane, vinyltriethoxysilane, alkylvinyldialkoxysilanes, or (meth)acryloxyalkyltrialkoxysilanes, e.g. (meth)acryloxyethyltrimethoxysilane and (meth)acryloxypropyltrimethoxysilane.

However, the silane monomers disclosed in WO2015/193192 release VOCs upon cross-linking. For example, the most well-known representative, vinyltrimethoxysilane, releases the toxic substance methanol. Vinyltriethoxysilane releases the less hazardous ethanol but, due to the more bulky ethoxy residue of vinyltriethoxysilane, the total amount of generated VOC is even higher than for vinyltrimethoxysilane. Hence, there is a need for copolymer dispersions, which allow the formulation of preservative-free matt, high pvc paints with excellent wet scrub resistance without compromising the low emission targets of an interior paint.

### SUMMARY

According to the present invention, it has now surprisingly been found that preservative-free, high pH coating compositions with both excellent wet scrub resistance and low VOC levels can be produced from copolymer dispersions prepared with hydrolysable silanes comprising R-C(O)-O residues, where R is an alkyl, aryl or aralkyl group. For example, where the silane is vinyltriacetoxysilane, acetic acid is generated during the cross-linking reaction but, although acetic acid is itself considered a VOC, it is readily converted to sodium or potassium acetate due to the high pH of the paint. The acetate salt is not released into the environment but remains in the paint layer as immobile, non-hazardous compound. Similar chemistry applies to hydrolyzable silanes with other carboxylate residues.

Thus, in one aspect, the invention resides in a water-based coating composition comprising:
A. a pigment; and
B. an aqueous polymer dispersion produced by free-radical aqueous emulsion polymerization of a mixture comprising, based on the total amount of monomers, i) 20 to 79.95 parts by weight of at least one first monomer whose homopolymer has a glass transition temperature Tg <25°C, ii) 20 to 79.95 parts by weight at least one second monomer whose homopolymer has a glass transition temperature Tg> 25°C, and iii) 0.05-5 parts by weight of at least one hydrolyzable silane of the formula (R¹)ₘSi(R²)ₙ(OR³)₄₋ₘ₋ₙ, with n = 0-3, m = 0-3 and n+m = 0-3, R¹ and R² independently being selected from functionalized or non-functionalized, unbranched or branched alkenyl, alkyl, aryl, and aralkyl radicals and R³ being selected from acyl (C(O)Z) radicals, where Z is an substituted or unsubstituted, unbranched or branched alkyl, aryl or aralkyl group or hydrogen,
wherein the coating composition has a pH of at least 10 and is substantially free of preservatives.

### DETAILED DESCRIPTION

As used herein, the term "substantially free of preservatives", when used in relation to a coating composition, means a coating composition which contains less than 10 ppm by weight, preferably less than 5 ppm and most preferably no detectable amount, of a chemical preservative, such as the compounds listed as Product-Type 6 biocides in EU Biocidal Products Regulation (528/2012). In some embodiments, the present coating composition may not be subject to labeling with the safety phase EUH 208, which is otherwise required for coating compositions using biocides. For example, the amount of a 3:1 mixture of 5-chloro-2-methyl-4-isothiazolin-3-one (CIT) and 2-methyl-4-isothiazolin-3-one (MIT) needs to be less than 1.5 ppm to avoid EUH 208 labeling. The term "preservative" does not include organic and inorganic bases, such as sodium or potassium hydroxide, used to raise the pH of the coating composition to at least 10.

Described herein is a water-based coating composition comprising a pigment and an aqueous polymer dispersion produced by free-radical aqueous emulsion polymerization of a mixture comprising i) 20 to 79.95 parts by weight of at least one first monomer whose homopolymer has a glass transition temperature Tg <25°C, ii) 20 to 79.95 parts by weight at least one second monomer whose homopolymer has a glass transition temperature Tg> 25°C, and iii) 0.05-5 parts by weight of at least one hydrolyzable silane of the formula (R¹)ₘSi(R²)ₙ(OR³)₄₋ₘ₋ₙ, with n = 0-3, m = 0-3 and n+m = 0-3, R¹ and R² independently being selected from functionalized or non-functionalized, unbranched or branched alkenyl, alkyl, aryl, and aralkyl radicals and R³ being selected from acyl (C(O)Z) radicals, where Z is an substituted or unsubstituted, unbranched or branched alkyl, aryl or aralkyl group or hydrogen. The coating composition is maintained at a pH of at least 10, such as at least 10.5, preferably at least 11, to stabilize the coating composition against microbiological attack.

The Tg values for the homopolymers of the majority of monomers are known and are listed for example in Ullmann's Encyclopedia of Industrial Chemistry, volume A21, page 169, 5th edition, VCH Weinheim, 1992.

### First Monomer

The at least one first monomer used to produce the aqueous polymer dispersion of the present coating composition whose homopolymer has a glass transition temperature Tg <25°C may be selected from acrylic and methacrylic acid esters, olefins, vinyl esters of C₃ to Cis carboxylic acids and mixtures thereof. In some embodiments, the at least one first monomer is selected from ethyl acrylate, n-propyl acrylate, n-butyl acrylate, isobutyl acrylate, sec-butyl acrylate, n-hexyl acrylate, 2-ethylhexyl acrylate, n-hexyl methacrylate, 2-ethylhexyl methacrylate, or 2-propylheptyl acrylate, and mixtures thereof. Additionally or alternatively, the at least one first monomer may be selected from ethylene, vinyl esters of saturated branched monocarboxylic acids having from 9 to 11 carbon atoms in the acid radical, and mixtures thereof. In one preferred embodiment, the at least one first monomer comprises butyl acrylate.

Typically, the mixture polymerized to produce the aqueous polymer dispersion of the present paint composition comprises from 20 to 79.95 parts by weight, such as from 25 to 74.9 parts by weight, preferably from 30 to 69.8 parts by weight, more preferably from 35 to 64.75% by weight, based on the total amount of monomers, of the at least one first monomer.

### Second Monomer

The at least one second monomer used to produce the aqueous polymer dispersion of the present coating composition whose homopolymer has a glass transition temperature Tg >25°C may be selected from vinyl esters of C₁ to C₂ carboxylic acids, methacrylic acid esters, vinyl aromatics, vinyl halogenides, and mixtures thereof. In some embodiments, the at least one second monomer is selected from vinyl acetate, methyl methacrylate, styrene and mixtures thereof. In one preferred embodiment, the at least one second monomer comprises styrene.

Typically, the mixture polymerized to produce the aqueous polymer dispersion of the present coating composition comprises from 20 to 79.95 parts by weight, such as from 25 to 74.9 parts by weight, preferably from 30 to 69.8 parts by weight, more preferably from 35 to 64.75% by weight, based on the total amount of monomers, of the at least one second monomer.

### Hydolyzable Silane

In addition to the first and second monomers, the mixture polymerized to produce the aqueous polymer dispersion of the present coating composition comprises from 0.05 to 5 parts by weight, such as such as from 0.1 to 3 parts by weight, preferably from 0.2 to 2 parts by weight, more preferably from 0.25 to 1 part by weight, based on the total amount of monomers, of at least one hydrolyzable silane of the formula:

(R¹)ₘSi(R²)ₙ(OR³)₄₋ₘ₋ₙ

where
n = 0-3, m = 0-3 and n+m = 0-3, and preferably n+m=1,
R¹ and R² independently are selected from functionalized or non-functionalized unbranched or branched alkenyl, alkyl, aryl, and aralkyl radicals, and
R³ is selected from acyl (C(O)Z) radicals, where Z is an substituted or unsubstituted unbranched or branched alkyl, aryl or aralkyl group or hydrogen and preferably is an aliphatic C₁-C₃ group.

In some embodiments, at least one of R¹ and R² in the hydrolysable silane comprises an alkyl, aryl, or aralkyl radical functionalized with one or more of a mercapto group, an epoxy group, an amino group, and a glycidyl group. In other embodiments, at least one of R¹ and R² comprises an alkyl, aryl, or aralkyl radical functionalized with a methacryloyl group or an acryloxy group or comprises an alkenyl group. Preferably, at least one of R¹ and R² comprises a vinyl group. More preferably, the at least one hydrolysable silane comprises vinyl triacetoxysilane.

### Additional Monomers

In addition to the first and second monomers, also referred to herein as the main monomers, and the hydrolysable silane, the mixture polymerized to produce the aqueous polymer dispersion of the present coating composition may optionally comprise one or more additional monomers different from the main monomers.

One such optional additional monomer comprises one or more ethylenically unsaturated epoxy-containing compounds. Examples of suitable ethylenically unsaturated epoxy-containing compounds comprise glycidyl acrylate, glycidyl methacrylate, allyl glycidyl ether, vinyl glycidyl ether, vinylcyclohexene oxide, limonene oxide, myrcene oxide, caryophyllene oxide, vinyltoluenes and styrenes substituted with a glycidyl radical in the aromatic moiety, and vinylbenzoates substituted with a glycidyl radical in the aromatic moiety. Preference is given to glycidyl acrylate, glycidyl methacrylate, allyl glycidyl ether, and vinyl glycidyl ether. Where present, the ethylenically unsaturated epoxy-containing compound(s) may comprise from 0.05 to 10, preferably from 0.2 to 3 parts by weight, based on the total amount of monomers in the monomer mixture.

Further optional monomers are stabilizing monomers selected from the group of ethylenically unsaturated sulfonic acids, ethylenically unsaturated phosphonic and phosphoric acids, ethylenically unsaturated carboxylic acids, ethylenically unsaturated carboxylic amides, ethylenically unsaturated carboxylic anhydrides and mixtures thereof. The amount of stabilizing monomers is typically up to 10 parts by weight, such as from 0.5 to 7.5 parts by weight, preferably from 1.0 to 5 parts by weight, based on the total amount of monomers.

For example, the stabilizing monomer may comprise an ethylenically unsaturated C₃-C₈ monocarboxylic acid and/or an ethylenically unsaturated C₄-C₈ dicarboxylic acid, together with the anhydrides or amides thereof. Examples of suitable ethylenically unsaturated C₃-C₈ monocarboxylic acids include acrylic acid, methacrylic acid and crotonic acid. Examples of suitable ethylenically unsaturated C₄-C₈ dicarboxylic acids include maleic acid, fumaric acid, itaconic acid and citraconic acid. Examples of suitable ethylenically unsaturated carboxylic amides include acrylamide and methacrylamide.

Examples of suitable ethylenically unsaturated sulfonic acids include those having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid. A preferred ethylenically unsaturated sulfonic acid is 2-acrylamido-2-methylpropanesulfonic acid. Examples of suitable ethylenically unsaturated phosphonic or phosphoric acids include vinylphosphonic acid, esters of phosphonic or phosphoric acid with hydroxyalkyl(meth)acrylates and ethylenically unsaturated polyethoxyalkyletherphosphates.

In addition to or instead of the above acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

A preferred stabilization system comprises a mixture of at least one ethylenically unsaturated sulfonic acid (or salt) and at least one ethylenically unsaturated C₃-C₈ monocarboxylic acid and/or ethylenically unsaturated C₄-C₈ dicarboxylic acid or anhydride, preferably in combination with at least one ethylenically unsaturated carboxylic amide.

Further optional co-monomers are cyclic ureido co-monomers. Cyclic ureido co-monomers are known to impart improved wet adhesion properties to films and coatings formed from copolymers containing these co-monomers. Cyclic ureido compounds and their use as wet adhesion promoting co-monomers are disclosed in U.S. Patent Nos. 4,104,220; 4,111,877; 4,219,454; 4,319,032; 4,599,417 and 5,208,285.

Other optional co-monomers include unsaturated compounds that contain one or more carbonyl moieties. Examples of such suitable co-monomers include diacetone acrylamide (DAAM), polymerizable 1,3-dicarbonyl compounds and polymerizable 1,3-diketoamides. Suitable polymerizable 1,3-dicarbonyl compounds include acetoacetoxyethyl acrylate, acetoacetoxyethyl methacrylate (AAEM), acetoacetoxypropyl methacrylate, acetoacetoxybutyl methacrylate, 2,3-di(acetoacetoxy)propyl methacrylate and allyl acetoacetate. Such monomers are known to impart improved wet adhesion properties to coating compositions, especially on alkyd substrates (See DE 2535372 A1). Suitable polymerizable 1,3-diketoamides include those compounds described in U.S. Patent No. 5,889,098. Examples of compounds of this type include amido acetoacetonates such as 3-isopropenyl-α,α-dimethylbenzyl amidoacetoacetate, 4-isopropenyl-α,α-dimethylbenzyl amidoacetoacetate, 4-ethylenyl-phenyl amidoacetoacetate and the like.

Optionally, the monomer composition used in the present process may also contain up to 3 parts by weight, such as from 0.1 to 2 parts by weight, based on the total amount of monomers, of monomers with at least two non-conjugated ethylenically unsaturated groups. Such cross-linking co-monomers include triallyl cyanurate, triallyl isocyanurate, diallyl maleate, diallyl fumarate, divinyl benzene, diallyl phthalate, hexanediol diacrylate, ethyleneglycol dimethacrylate, and polyethylene glycol diacrylate.

In some embodiments the relative amount of monomers in the polymerization mixture are such that the final polymer particles have a glass transition temperature in the range of from -10 to 25°C, preferably -5 to 20°C, more preferably 0 to 15°C, as determined by differential scanning calorimetry according to ISO 16805.

### Dispersion Stabilization System

Both during and after polymerization, the polymer described herein is stabilized in the form of an aqueous copolymer dispersion or latex. The copolymer dispersion is therefore prepared in the presence of and subsequently contains a stabilization system which generally comprises emulsifiers, in particular nonionic emulsifiers and/or anionic emulsifiers and/or protective colloids. Mixtures of the different stabilizers can also be employed.

The amount of emulsifier employed will generally be at least 0.5 wt.%, based on the total quantity of monomers in the copolymer dispersion. Generally, emulsifiers can be used in amounts up to about 8 wt.%, based on the total quantity of monomers in the copolymer dispersion. Emulsifiers employed with preference herein are nonionic emulsifiers having alkylene oxide groups and/or anionic emulsifiers having sulfate, sulfonate, phosphate and/or phosphonate groups. Such emulsifiers, if desired, can be used together with molecularly or dispersely water-soluble polymers. Preferably also the emulsifiers used contain no alkylphenolethoxylate (APEO) structural units.

Examples of suitable nonionic emulsifiers include acyl, alkyl, oleyl, and alkylaryl ethoxylates. These products are commercially available, for example, under the name Genapol^{®}, Lutensol^{®} or Emulan^{®}. They include, for example, ethoxylated mono-, di-, and tri-alkylphenols (EO degree: 3 to 50, alkyl substituent radical: C4 to C12) and also ethoxylated fatty alcohols (EO degree: 3 to 80; alkyl radical: C8 to C36), especially C10-C14 fatty alcohol (3-40) ethoxylates, C11-C15 oxo-process alcohol (3-40) ethoxylates, C16-C18 fatty alcohol (11-80) ethoxylates, C11 oxo-process alcohol (3-40) ethoxylates, C13 oxo-process alcohol (3-40) ethoxylates, polyoxyethylenesorbitan monooleate with 20 ethylene oxide groups, copolymers of ethylene oxide and propylene oxide having a minimum ethylene oxide content of 10% by weight, the polyethylene oxide (4-40) ethers of oleyl alcohol, and the polyethene oxide (4-40) ethers of nonylphenol. Particularly suitable are the polyethylene oxide (4-40) ethers of fatty alcohols, more particularly of oleyl alcohol, stearyl alcohol or C11 alkyl alcohols.

The amount of nonionic emulsifiers used in preparing the copolymer dispersions herein is typically up to about 8% by weight, preferably up to about 5% by weight, more preferably up to about 3% by weight, based on the total monomer quantity. Mixtures of nonionic emulsifiers can also be employed.

Examples of suitable anionic emulsifiers include sodium, potassium, and ammonium salts of linear aliphatic carboxylic acids of chain length C12-C20, sodium hydroxyoctadecanesulfonate, sodium, potassium, and ammonium salts of hydroxy fatty acids of chain length C12-C20 and their sulfonation and/or sulfation and/or acetylation products, alkyl sulfates, including those in the form of triethanolamine salts, alkyl(C10-C20) sulfonates, alkyl(C10-C20) arylsulfonates, and their sulfonation products, lignosulfonic acid and its calcium, magnesium, sodium, and ammonium salts, resin acids, hydrogenated and dehydrogenated resin acids, and their alkali metal salts, dodecylated sodium diphenyl ether disulfonate, sodium alkyl sulfate, sulfated alkyl or aryl ethoxylate with EO degree between 1 and 30, for example ethoxylated sodium lauryl ether sulfate or a salt of a bisester, preferably of a bis-C4-C18 alkyl ester, of a sulfonated dicarboxylic acid having 4 to 8 carbon atoms, or a mixture of these salts, preferably sulfonated salts of esters of succinic acid, more preferably salts, such as alkali metal salts, of bis-C4-C18 alkyl esters of sulfonated succinic acid, or phosphates of polyethoxylated alkanols. Particularly suitable are sodium or potassium alkyl sulfates such as sodium lauryl sulfate, and sodium, potassium or ammonium salts of sulfated C10-C16 alkyl ethoxylates with an EO degree between 1 and 30.

The amount of anionic emulsifiers used can typically range from about 0.1% to about 3.0% by weight, preferably from about 0.1% to about 2.0% by weight, more preferably from about 0.5% to about 1.5% by weight, based on the total monomer quantity. Mixtures of anionic emulsifiers can also be employed.

Also suitable as stabilizers for the present dispersions are copolymerizable nonionic and anionic surfactants such as those disclosed in US 2014/0243552. Other suitable copolymerizable surfactants are sold under the trade names Hitenol^{®} BC, Hitenol^{®} KH, Hitenol^{®} AR, Adeka Reasoap SR, and Adeka Reasoap ER.

Along with emulsifiers, the aqueous copolymer dispersions employed in accordance with the present development may also comprise as part of the stabilizer system a selected type of protective colloid based on cellulose ethers, poly vinyl alcohol, poly vinyl pyrrolidone, polyacrylic acid, maleic acid styrene copolymers or other water-soluble polymers. Suitable protective colloids used in the copolymer dispersions herein include water-soluble or water-dispersible polymeric modified natural substances based on cellulose ethers. Such cellulose ethers have a viscosity, when tested as a 1 wt.% aqueous in water at 25°C, of 5 to 5,000 mPas, preferably of 10 to about 1,500 mPas, more preferably 10 to 500 mPas. Mixtures of celluloses ethers may be used to achieve these viscosity values. Examples of suitable cellulose ether materials include methyl cellulose, hydroxyethyl cellulose, hydroxypropyl cellulose, hydroxypropyl methyl cellulose, ethyl hydroxyethyl cellulose, methyl hydroxyethyl cellulose and combinations of these cellulose ethers.

Hydrophobically modified cellulose ethers may also be employed as the protective colloid in the copolymer dispersions herein. Such materials comprise cellulose ethers which have been hydrophobically modified with long chain hydrocarbon groups to reduce their water solubility. Hydrophobically modified cellulose ethers of this type are those described, for example, in US Patent Nos. 4,228,277; 4,352,916 and 4,684,704.

The protective colloids can be used individually or in combination. In the case of combinations, the two or more colloids can each differ in their molecular weights or they can differ in their molecular weights and in their chemical composition, such as the degree of hydrolysis, for example.

When protective colloids are used, the amount thereof, based on the total amount of monomers used, is typically from 0.1 to 5 parts by weight, preferably from 0.3 to 5 parts by weight.

In addition to the emulsifiers and protective colloids that are used during the emulsion polymerization of the copolymers herein, it is also possible to add further emulsifiers, protective colloids and/or other stabilizers after the polymerization process is complete.

### Preparation of Polymer Dispersion

The polymer dispersions used in the present paint composition can be prepared using emulsion polymerization procedures which result in the preparation of polymer dispersions in aqueous latex form. Such preparation of aqueous polymer dispersions of this type is well known and has already been described in numerous instances and is therefore known to the skilled artisan. Such procedures are described, for example, in U.S. Patent No. 5,849,389, and in the Encyclopedia of Polymer Science and Engineering, Vol. 8, p. 659 (1987).

The polymerization may be carried out in any manner known per se in one, two or more stages with different monomer combinations, giving polymer dispersions having particles with homogeneous or heterogeneous, e.g., core shell, hemispheres or gradient morphology. Any reactor system such as batch, loop, continuous, cascade, etc. may be employed. Preferably, the polymerization is carried out such that a homogeneous morphology of the polymer particles is obtained.

The polymerization temperature generally ranges from 20°C to 150°C, more preferably from 50°C to 120°C. The polymerization may take place under pressure in case a gaseous monomer is used.

The copolymerization can be undertaken by batch, semi batch or continuous emulsions polymerization, i.e. by processes in which all the monomer is added upfront or by monomer slow add processes.

In a typical polymerization procedure involving, for example, the mixture of monomers described above can be polymerized in an aqueous medium under pressures up to 120 bar in the presence of one or more initiators, at least one emulsifying agent and optionally a protective colloid component. In one embodiment, the aqueous reaction mixture in the polymerization vessel can be maintained at a pH of about 2 to about 7 by a suitable buffering agent.

The manner of combining the several polymerization ingredients, i.e. emulsifiers, monomers, initiators, protective colloids, etc., can vary widely. Generally an aqueous medium containing at least some of the emulsifier(s) can be initially formed in the polymerization vessel with the various other polymerization ingredients being added to the vessel thereafter.

Monomers can be added to the polymerization vessel continuously, incrementally or as a single charge addition of the entire amounts of co-monomers to be used. Co-monomers can be employed as pure monomers or can be used in the form of a pre-mixed emulsion. Where present, ethylene as a co-monomer can be pumped into the polymerization vessel and maintained under appropriate pressure therein.

It is also possible to start the emulsion polymerization using a seed latex, for example with about 0.5 to about 15% by weight of the dispersion.

In some embodiments, it may be desirable to pre-polymerize a small amount (less than 10 weight %) of the monomer composition to produce an *in-situ* seed before the remaining amounts of the monomer composition are metered into the reactor to form the final polymer dispersion.

As noted, the polymerization of the ethylenically unsaturated monomers will generally take place in the presence of at least one initiator for the free-radical polymerization of these co-monomers. Suitable initiators for the free-radical polymerization, for initiating and continuing the polymerization during the preparation of the dispersions, include all known initiators which are capable of initiating a free-radical, aqueous polymerization in heterophase systems. These initiators may be peroxides, such as alkali metal and/or ammonium peroxodisulfates, organic hydroperoxides, more particularly water-soluble ones, or azo compounds, more particularly water-soluble azo compounds.

As polymerization initiators, it is also possible to use redox initiators. Examples thereof are peroxodisulfates, tert-butyl hydroperoxide and/or hydrogen peroxide in combination with reducing agents, such as with sulfur compounds, an example being the sodium salt of hydroxymethanesulfinic acid, Bruggolite^{®} FF6 and FF7, sodium sulfite, sodium disulfite, sodium thiosulfate, and acetone-bisulfite adduct, or with ascorbic acid, sodium erythobate, tartaric acid, or with reducing sugars.

The amount of the initiators or initiator combinations used in the process varies within what is usual for aqueous polymerizations in heterophase systems. In general the amount of initiator used will not exceed 5% by weight, based on the total amount of the co-monomers to be polymerized. The amount of initiators used, based on the total amount of the co-monomers to be polymerized, is preferably 0.05% to 2.0% by weight.

In this context, it is possible for the total amount of initiator to be included in the initial charge to the reactor at the beginning of the polymerization. More preferably, a portion of the initiator is included in the initial charge, and the remainder is added after the polymerization has been initiated, in one or more steps or continuously. The addition may be made separately or together with other components, such as emulsifiers or monomer emulsions. The molecular weight of the various copolymers in the copolymer dispersions herein can be adjusted by adding small amounts of one or more molecular weight regulator substances. These regulators are generally used in an amount of up to 2% by weight, based on the total co-monomers to be polymerized. As regulators, it is possible to use all of the substances known to the skilled artisan. Preference is given to organic thio compounds such as methylthiol, ethylthiol, n-propylthiol, n-butylthiol, n-hexylthiol, n-octylthiol, n-decylthiol, n-dodecylthiol, n-tetradecylthiol, n-hexadecylthiol, n-octadecylthiol, cyclohexylthiol, isopropylthiol, tert-butylthiol, tert-nonylthiol, tert-dodecylthiol, 4-methylbenzene thiol, 2-mercaptopropionic acid, butyl 3-mercaptopropionate, isooctyl thioglycolate, isooctyl 3-mercaptopropionate, 4,4'-thiobisbenzenethiol, pentaerythritol tetrakis(2-mercaptoacetate) and pentaerythritol tetrakis(3-mercaptopropionate). Preferably, the polymerization is conducted in the presence of less than 0.05 parts by weight, based on the total amount of monomers, of a molecular weight regulator, more preferably in the absence of any molecular weight regulator.

On completion of the polymerization, a further, preferably chemical aftertreatment, especially with redox catalysts, for example combinations of the above-mentioned oxidizing agents and reducing agents, may follow to reduce the level of residual unreacted monomer on the product. In addition, residual monomer can be removed in known manner, for example by physical demonomerization, i.e. distillative removal, especially by means of steam distillation, or by stripping with an inert gas. Physical demonomerization may also reduce the volatile organic compounds (VOC) released through the crosslinking reaction of the silane monomers disclosed in WO2015/193192. The usage of an inventive silane may render physical demonomerization procedures unnecessary, thereby simplifying the production process of the polymer dispersion.

The polymerized particles produced by the present process typically have a have a weight-averaged diameter of less than 200 nm, such as less than 150 nm, preferably less than 120 nm, as measured by a combination of laser diffraction and polarization intensity differential scattering (PIDS) using a Beckman Coulter LS 13320 Particle Size Analyzer.

In addition to monomers described herein, the final polymers may also contain a water-soluble cross-linking agent. Such a cross-linking agent will react with specific polymer functionalities such as carbonyl or 1,3-dicarbonyl groups as water is removed from the coating compositions herein and as a film or coating is formed from the polymerized components.

A type of water-soluble cross-linking agent that can be used in the compositions herein comprises a compound which contains at least two hydrazine and/or hydrazide moieties. Particularly suitable are dihydrazine compounds of aliphatic dicarboxylic acids of 2 to 10, in particular 4 to 6, carbon atoms, e.g., oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide and/or itaconic acid dihydrazide. Water-soluble aliphatic dihydrazines of 2 to 4 carbon atoms, e.g., ethylene-1,2-dihydrazine, propylene-1,3-dihydrazine or butylene-1,4-dihydrazine, are also suitable. Adipic acid dihydrazide (ADH) is a preferred water-soluble cross-linking agent for use in the compositions herein, especially those produced from monomer compositions containing diacetone acrylamide (DAAM).

Other suitable water-soluble cross-linking agents are compounds which contain at least two amine functional moieties such as ethylene diamine and hexamethylene diamine. Such cross-linking agents are preferred in combination with polymers comprising 1,3-dicarbonyl groups, such as acetoacetoxyethyl methacrylate (AAEM).

Generally, such water-soluble cross-linking agents are post added to the dispersion such that the molar ratio of cross-linking agent functional groups to polymer functional groups is between about 0.1 and about 2.0. More preferably the molar ratio of cross-linking agent functional groups to copolymer functional groups in the blend will be between about 0.5 and 2.0.

The aqueous polymer dispersions produced by the process described herein generally have a solids content of from 30 to 70% by weight, preferably from 40 to 55% by weight, and a pH between 2.5 and 9.0, preferably between 3.0 and 8.0, more preferably between 4.5 and 7.0. The pH value of the dispersion may be raised by addition of an organic or inorganic base, such as an amine or an alkali metal hydroxide, such as sodium or potassium hydroxide. In some embodiments, it is preferred to effect neutralization with a nitrogen-free base.

The aqueous polymer dispersions described herein are free of ammonia. They may also be free of biocides. In other embodiments, to increase the shelf life of the polymer dispersions, biocides may be added that can be decomposed during subsequent preparation of the coating composition to yield a preservative-free coating. For example, 2,2-dibromo-3-nitrilopropionamide (DBNPA) readily decomposes at pH values above 7. 5-chloro-2-methyl-3(2H)-isothiazolone (CIT) can be decomposed either through increase of the pH, preferably to at least 11, or by addition of, e.g., cysteine to the coating composition. In some embodiments, the polymer dispersions may comprise up to 50 ppm CIT and up to 1000 ppm DBNPA. Preferably, the dispersions comprise a mixture of 5 to 14.9 ppm CIT and 50 to 500 ppm DBNPA. More information on a biocide treatment and removal process that allows aqueous polymer dispersions to be protected from microbial attack during storage, while allowing the end product, such as a coating composition, remain substantially preservative-free can be found in our US Patent Application Serial No. 62/741137 filed October 4, 2018.

Additionally, in some embodiments, the present aqueous polymer dispersions have a Total Volatile Organic Compound (TVOC) content less than 2000 ppm, preferably less than 1000 ppm, as determined by gas chromatography according to ISO 11890-2. A volatile organic compound is defined herein as a carbon containing compound that has a boiling point below 250°C at atmospheric pressure (as defined in the Commission Decision 2014/312/EU).

### Coating Composition Formulation and Preparation

The aqueous polymer dispersions described herein are stable fluid systems which can be used to produce coating compositions such as interior and exterior paints, plasters, and renders, preferably to produce interior paints. When used in paint applications, the aqueous polymer dispersions are typically combined with one or more conventional fillers and/or pigments. In this context, pigments are understood as solids which have a refractive index greater than or equal to 1.75, whereas fillers are understood as meaning solids which have a refractive index of less than 1.75.

Preferred fillers useful in the paint compositions herein can be, for example, calcium carbonate, magnesite, dolomite, kaolin, mica, talc, silica, calcium sulfate, feldspar, barium sulfate and opaque polymers. Examples of white pigments useful in the paint compositions herein can be zinc oxide, zinc sulfide, basic lead carbonate, antimony trioxide, lithopone (zinc sulfide+barium sulfate) and, preferably, titanium dioxide. Examples of inorganic colored pigments which may preferably be used in the paint compositions herein include iron oxides, carbon black, graphite, luminescent pigments, zinc yellow, zinc green, Paris blue, ultramarine, manganese black, antimony black, manganese violet, bismuth vanadate or Schweinfurt green. Suitable organic colored pigments preferably are, for example, sepia, gamboge, Cassel brown, toluidine red, para red, Hansa yellow, indigo, azo dyes, anthraquinone and indigo dyes as well as dioxazine, quinacridone, phthalocyanin, isoindolinone and metal complex pigments of the azomethine series.

The fillers may be used as individual components. Mixtures of fillers such as, for example, calcium carbonate/kaolin and calcium carbonate/kaolin/talc have also been found to be particularly useful in practice. To increase the hiding power of the coating and to save on titanium dioxide, finely divided fillers such as, for example, finely divided calcium carbonate and mixtures of various calcium carbonates with different particle size distribution are frequently used. To adjust the hiding power, the shade and the depth of color of the coatings formed, the fillers are mixed with appropriate amounts of white pigment and inorganic and/or organic colored pigments. To disperse the fillers and pigments in water, auxiliaries based on anionic or non-ionic wetting agents, such as preferably, for example, sodium pyrophosphate, sodium polyphosphate, naphthalenesulfonate, sodium polyacrylate, sodium polymaleinates and polyphosphonates such as sodium 1-hydroxyethane-1,1-diphosphonate and sodium nitrilotris(methylenephosphonate), may be added.

Thickeners may also be added to the coating compositions described herein. Thickeners which may be used include, inter alia, cellulose derivates such as methylcellulose (MC), hydroxyethylcellulose (HEC) and carboxymethylcellulose. Other thickeners which may be used include casein, gum arabic, gum tragacanth, starch, sodium alginate, polyvinyl alcohol, polyvinylpyrrolidone, sodium polyacrylate and water-soluble copolymers based on acrylic and methacrylic acid, such as acrylic acid/acrylamide and methacrylic acid/acrylic ester copolymers. Hydrophobically-modified alkali soluble (acrylic) emulsions (HASE), hydrophobically-modified ethoxylate (poly)urethanes (HEUR), and polyether polyols (PEPO) are also available. Inorganic thickeners, such as, for example, bentonites or hectorite, may also be used.

For various applications, it is sometimes also desirable to include small amounts of other additives, such as pH modifiers, and antifoamers, incorporated in the coating compositions herein. This may be done in a conventional manner and at any convenient point in the preparation of the coating compositions. Coating compositions produced herein are generally free of any organic solvent, plasticizer or coalescent agent and have a minimum film forming temperature (MFFT) less than 10°C, preferably less than 6°C, more preferably less than 3°C, most preferably less than 1°C.

The polymer dispersions described herein are used to produce biocide-free coating compositions. The pH of these biocide-free coating compositions is adjusted to a value of at least 10.0, such as at least 10.5, preferably at least 11.0, and more preferably within the range of 11.0 to 11.5, to inhibit microbial growth. To adjust the pH of the coating composition to this pH value and to buffer it at this pH value, at least one water-soluble alkali metal silicate, at least one water-soluble alkali metal or alkaline earth metal alkyl siliconate, or a mixture thereof may be added to the coating composition.

Water-soluble alkali metal silicates, also known as water glass or liquid glass, are described by the chemical formula M₂O x n SiO₂, where M can be lithium, sodium or potassium, and where n can range between 1-4. Preferably, alkali metal silicates with n > 3.2 are used. A preferred alkali metal silicate is potassium silicate.

Due to the ease of handling and mixing, aqueous solutions of alkali metal silicates are preferably used, particularly those with a solid content not exceeding 40 wt. %.

In addition to or instead of water-soluble alkali metal silicates, water-soluble alkali metal or alkaline earth metal alkyl siliconates, such as sodium, potassium or calcium methyl siliconate, can be used. A preferred siliconate is potassium methyl siliconate. Due to the ease of handling and mixing, aqueous solutions of siliconates are preferably used.

Particularly preferred is the use of potassium silicate as buffer component.

Preferably, the coating composition comprises, based on the total weight of the coating composition, 0.1 to 4 wt.%, preferably 0.2 to 3 wt.%, more preferably 0.3 to 2 wt.%, most preferably 0.4 to 1.5 wt.% of at least one water-soluble alkali metal silicate, at least one water-soluble alkali metal or alkaline earth metal alkyl siliconate, or a mixture thereof.

The pH value of the coating composition may further be adjusted by addition of an organic or inorganic base. If the polymer dispersion comprises the biocide 5-chloro-2-methyl-3(2H)-isothiazolone (CIT), it can be removed through increase of the pH to high values, preferably above 11, or by addition of cysteine or other suitable additives, such as N-acetyl cysteine, mercaptoethanol, mercaptopropionic acid, methyl mercaptopropionate, glutathione, thioglycolate, sodium thiosulfate, sodium bisulfite, pyrithione, mercaptopyridine, dithiothreitol, mercaptoethanesulfonate, and/or sodium formaldehyde sulfoxylate to the coating composition, with cysteine being preferably used. Polymer dispersions comprising 2,2-dibromo-3-nitrilopropionamide (DBNPA) do not require addition of any decomposition agents, since DBNPA readily decomposes at pH values above 7. In any case, preservative-free coating compositions are obtained, as outlined above.

The biocide-free coating compositions may further comprise stabilizers, that prevent premature silicification of the silicate of siliconate buffers. Suitable stabilizers are organic compounds comprising the functionalities of primary, secondary or tertiary amines or quarternary ammonium salts.

Preferred pigment volume concentrations (pvc) of the coating compositions according to the invention are above the critical pvc, at least greater than 60%, such as between 60-90%, preferably between 65-85%, such as between 70-80%. The pigment volume concentration is defined as the ratio of the volumes of pigments and fillers to the total volume of pigment, fillers and (dry) binders. Herein, the silicate and siliconate buffers are counted as binders.

The aqueous copolymer dispersion described herein is particularly useful as binder for waterborne coating compositions with low emission regarding Total Volatile Organic Compound (TVOC) and Total Semi Volatile Organic Compound (TsVOC) contents. sVOC compounds have a boiling point above 250°C (as defined in detail in the Commission Decision 2014/312/EU) and may be determined by gas chromatography according to ISO 11890-2.

In some embodiments, coating compositions produced from the aqueous copolymer dispersions described herein have a TVOC content less than 1000 ppm, preferably less than 500 ppm, more preferably less than 250 ppm, such as less than 100 ppm, as determined by gas chromatography according to ISO 11890-2.

The invention will now be more particularly described with reference to the following non-limiting Examples.

### Preparation of Polymer Dispersions

### Example 1

A 3 liter reactor equipped with a reflux condenser and an anchor stirrer was filled with 600 g of deionized (DI) water and 17 g of a 27% active aqueous solution of a sodium lauryl ether sulfate with approximately 2 ethylene oxide units. The reactor content was heated to 80°C and 3% of the monomer feed was added (initial charge). The monomer feed was obtained by mixing the ingredients in Table 1 under stirring. A solution of 0.6 g sodium persulfate in 12 g of water was added and the reactor contents were held at 80°C for 15 min (seed polymerization). Subsequently, the remaining amount of the monomer feed was added to the reactor with a constant dosage rate over 240 min. The reactor temperature was maintained at 80°C during the feed additions. After completion of the feed additions, a solution of 0.6 g sodium persulfate in 6 g water was added to the reactor. Subsequently, 0.6 g of sodium metabisulfite in 6 g water were added within 30 min. The reactor contents were held at 80°C for another 45 minutes and then cooled to 50°C. At 50°C, 1.4 g of sodium persulfate in 12 g water were added to the reactor. Subsequently, 1.4 g of Bruggolite^{®} FF6M (Brüggemann) in 12 g water were added within 30 min. The reactor content was cooled to room temperature and the pH of the resulting dispersion was adjusted to approx. 6 with 5% caustic soda. The dispersion is protected against microbial attack by addition of 1.0 g Acticide^{®} DBW (Thor, comprising an active content of 25% 2,2-dibromo-3-nitrilopropionamide) and 2.5 g Acticide^{®} C1 (Thor, comprising an active content of 1.1% 5-chloro-2-methyl-3(2H)-isothiazolone).

The properties of the resulting polymer dispersion are summarized in Table 2.

### Examples 2 to 6

The process of Example 1 was repeated with different monomer feeds, as described in Table 1.

The properties of the resulting polymer dispersions are summarized in Table 2.

**Table 1: Composition of the monomer feeds of Ex. 1-6 (in grams)**

| | Ex. 1 | Ex. 2 | Ex. 3 | Ex. 4 | Ex. 5 | Ex. 6 |
|---|---|---|---|---|---|---|
| DI water | 506 | 506 | 506 | 506 | 506 | 506 |
| Sodium lauryl ether sulfate, 27% in water | 43 | 43 | 43 | 43 | 43 | 43 |
| Sodium persulfate | 3.5 | 3.5 | 3.5 | 3.5 | 3.5 | 3.5 |
| Sodium hydroxide | 0.9 | 0.9 | 0.9 | 0.9 | 0.9 | 0.9 |
| Methacrylic acid | 9.4 | 9.4 | 9.4 | 9.4 | 9.4 | 9.4 |
| Methacrylamide | 18.9 | 18.9 | 18.9 | 18.9 | 18.9 | 18.9 |
| Sodium 2-acrylamido-2-methyl-1-propanesulfonate, 50% in water | 37.8 | 37.8 | 37.8 | 37.8 | 37.8 | 37.8 |
| Styrene | 444 | 444 | 444 | 444 | 444 | 444 |
| n-Butyl acrylate | 756 | 756 | 756 | 756 | 756 | 756 |
| Triacetoxy(vinyl)silane | 3.6 | 6.0 | 3.6 | 0 | 0 | 0 |
| Triethoxy(vinyl)silane | 0 | 0 | 0 | 3.6 | 6.0 | 0 |
| Glycidyl methacrylate | 0 | 0 | 6.0 | 0 | 0 | 0 |

**Table 2: Properties of the polymer dispersions**

| | Ex. 1 | Ex. 2 | Ex. 3 | Ex. 4 | Ex. 5 | Ex. 6 |
|---|---|---|---|---|---|---|
| Solid content (%)¹ | 49.9 | 49.7 | 50.0 | 50.4 | 50.2 | 50.2 |
| Brookfield viscosity (mPa s)² | 1960 | 1490 | 1700 | 2740 | 2250 | 2540 |
| pH | 6.1 | 5.9 | 6.0 | 6.1 | 6.0 | 6.0 |
| d_{w} (nm)³ | 110 | 110 | 110 | 110 | 110 | 110 |
| T_{g} (°C)⁴ | 6.7 | 6.9 | 7.3 | 6.4 | 6.8 | 7.0 |
| MFFT (°C)⁵ | 0 | 0 | 0 | 0 | 0 | 0 |

| | | | | | | |
|---|---|---|---|---|---|---|
| ¹ Gravimetric determination after 24 h drying at 110°C ² Measurement conditions: 20°C, 20 rpm, spindle 3 ³ Weight-average particle diameter as determined by a Beckman Coulter LS 13320 Particle Size Analyzer ⁴ Glass transition temperature as measured by differential scanning calorimetry (DSC) according to ISO 16805. ⁵ The minimum film forming temperature (MFFT) is defined as the lowest temperature at which a polymer dispersion coalesces when laid on a substrate as a thin film, thereby forming clear transparent film. | | | | | | |

### Preparation and Testing of Biocide-free Matt Interior Paints

### Examples 7-9 (Inventive) and Examples 10-12 (Comparative)

Biocide-free matt interior paints were prepared by mixing the ingredients in Table 3 at room temperature under stirring. After dissolving and dispersing item nos. 2-5 in water, pigment and fillers as per item nos. 6-9 were dispersed consecutively by increasing the dissolver speed to 5000 rpm. After the preparation of the mill base, item nos. 10-13 were added while gently stirring. The solid contents of all polymer dispersions were adjusted to 48% before their addition. The resulting paints had a solid content of approx. 57% and a pigment volume concentration (pvc) of approximately 75% (counting potassium silicate as binder). The pH of all paints was about 11.3.

The properties of the resulting paints are displayed in Table 4.

**Table 3: Composition of biocide-free matt interior paints**

| Pos. | | Supplier | Description | Parts per weight |
|---|---|---|---|---|
| 1 | Water | | | 328 |
| 2 | Lopon^{®} 890 | ICL | Dispersing agent | 2 |
| 3 | Tylose^{®} H 30000 YP2 | SE Tylose | Cellulosic thickener | 4 |
| 4 | Lopon^{®} 827 | ICL | Stabilizer | 3 |
| 5 | Agitan^{®} 282 | Miinzing | Defoamer | 3 |
| 6 | Kronos^{®} 2300 | Kronos | Titanium dioxide | 120 |
| 7 | Omyacoat^{®} 850-OG | Omya | Calcium carbonate | 135 |
| 8 | Omya^{®} BL | Omya | Calcium carbonate | 180 |
| 9 | MicaCelia 125 L | Ziegler | Muscovite mica | 50 |
| 10 | Dispersion per Ex. 1-6 | | | 125 |
| 11 | Tego^{®} Phobe 1401 | Evonik | Hydrophobizing agent | 5 |
| 12 | Betolin^{®} K 28 | Wöllner | Potassium silicate, 28% in water | 30 |
| 13 | Lopon^{®} PHB | ICL | Stabilizing agent | 15 |

**Table 4: Properties of the biocide-free matt interior paints**

| Paint¹ | 7 | 8 | 9 | C10 | C11 | C12 |
|---|---|---|---|---|---|---|
| Dispersion as per Ex.¹ | 1 | 2 | 3 | 4 | 5 | 6 |
| WSR (µm) ² | 7.6 | 6.1 | 6.3 | 8.0 | 5.9 | 42 |
| WSR (class) ² | II | II | II | II | II | III |
| TVOC (ppm) ³ | 70 | 81 | 85 | 143 | 213 | 64 |
| Ethanol (ppm) ³ | <10 | <10 | <10 | 65 | 122 | <10 |

| | | | | | | |
|---|---|---|---|---|---|---|
| Comparative examples are marked with a 'C' ² The wet scrub resistance (WSR) of the above paints was tested by means of the nonwoven pad method according to ISO 11998. The paints were applied onto Leneta foil P121-10N with a 300 µm scraper. After drying for 28 days at 23°C and 50% relative humidity, the paint films were inserted into abrasion tester model 494 (Erichsen) with adapters for wet scrub tests according to ISO 11998 and scrubbed with Scotch-Brite^{™} Handpad 7448, Type S Ultra Fine (3M) after treatment of pad and film with a 0.25% aqueous solution of sodium n-dodecylbenzenesulfonate. Reported are the thickness loss of the paint film in µm after 200 cycles and the corresponding classification of the paint according to EN 13300. ³ Total Volatile Organic Compound (TVOC) and ethanol content as determined by gas chromatography according to ISO 11890-2. | | | | | | |

As can be inferred from Table 4, those paints comprising dispersions with hydrolyzable silanes exhibit significantly better wet scrub resistances than comparative paint 12 without any silane-functional monomer. However, paints 10 and 11 comprising triethoxy(vinyl)silane suffer from a significantly increased TVOC content due to the release of ethanol. Only the inventive paints 7-9 exhibit good wet scrub resistances and low TVOC values.

While the present invention has been described and illustrated by reference to particular embodiments, those of ordinary skill in the art will appreciate that the invention lends itself to variations not necessarily illustrated herein. For this reason, then, reference should be made solely to the appended claims for purposes of determining the true scope of the present invention.

## Claims

1. A water-based coating composition comprising:
A. a pigment; and
B. an aqueous polymer dispersion produced by free-radical aqueous emulsion polymerization of a mixture comprising, based on the total amount of monomers, i) 20 to 79.95 parts by weight of at least one first monomer whose homopolymer has a glass transition temperature Tg <25 ° C, ii) 20 to 79.95 parts by weight at least one second monomer whose homopolymer has a glass transition temperature Tg> 25 ° C, and iii) 0.05-5 parts by weight of at least one hydrolyzable silane of the formula (R¹)ₘSi(R²)ₙ(OR³)₄₋ₘ₋ₙ, with n = 0-3, m = 0-3 and n+m = 0-3, R¹ and R² independently being selected from functionalized or non-functionalized, unbranched or branched alkenyl, alkyl, aryl, and aralkyl radicals and R³ being selected from acyl (C(O)Z) radicals, where Z is an substituted or unsubstituted, unbranched or branched alkyl, aryl or aralkyl group or hydrogen, wherein the coating composition has a pH of at least 10 and is substantially free of preservatives.

2. The coating composition according to claim 1, wherein the at least one first monomer is selected from acrylic and methacrylic acid esters, olefins and vinyl esters of C₃ to C₁₈ carboxylic acids.

3. The coating composition according to claim 1 or claim 2, wherein the at least one first monomer is selected from ethyl acrylate, n-propyl acrylate, n-butyl acrylate, isobutyl acrylate, sec-butyl acrylate, n-hexyl acrylate, 2-ethylhexyl acrylate, n-hexyl methacrylate, 2-ethylhexyl methacrylate, or 2-propylheptyl acrylate, and mixtures thereof.

4. The coating composition according to claim 1 or claim 2, wherein the at least one first monomer is selected from ethylene, vinyl esters of saturated branched monocarboxylic acids having from 9 to 11 carbon atoms in the acid radical, and mixtures thereof.

5. The coating composition according to any preceding claim, wherein the at least one second monomer is selected from vinyl esters of C₁ to C₂ carboxylic acids, methacrylic acid esters, vinyl aromatics, vinyl halogenides, and mixtures thereof, or wherein the at least one second monomer is selected from vinyl acetate, methyl methacrylate, styrene and mixtures thereof, or wherein the at least one second monomer comprises styrene.

6. The coating composition according to any preceding claim, wherein at least one of R¹ and R² comprises an alkyl, aryl, or aralkyl radical functionalized with one or more of a mercapto group, an epoxy group, an amino group, and a glycidyl group.

7. The coating composition according to any one of claims 1 to 5, wherein at least one of R¹ and R² comprises an alkyl, aryl, or aralkyl radical functionalized with a methacryloyl group or an acryloxy group or comprises an alkenyl group, or wherein at least one of R¹ and R² comprises a vinyl group.

8. The coating composition according to any preceding claim, wherein Z comprises an aliphatic C₁-C₃ group.

9. The coating composition according to any preceding claim, wherein n+m = 1.

10. The coating composition according to any preceding claim, wherein the at least one hydrolysable silane comprises vinyl triacetoxysilane.

11. The coating composition according to any preceding claim, wherein the mixture further comprises (iv) from 0.05 to 10%, preferably from 0.2 to 3%, by weight of one or more ethylenically unsaturated epoxy-containing compounds.

12. The coating composition according to any preceding claim, wherein the mixture further comprises (v) a stabilizing monomer combination comprising at least one ethylenically unsaturated sulfonic acid or salt thereof and at least one ethylenically unsaturated C₃-C₈ monocarboxylic acid and/or ethylenically unsaturated C₄-C₈ dicarboxylic acid or anhydride, preferably together with at least one ethylenically unsaturated carboxylic amide.

13. The coating composition according to any preceding claim and having a pH of at least 10.5, preferably at least 11.

14. The coating composition according to any preceding claim and having a minimum film forming temperature (MFFT) less than 10°C, preferably less than 6°C, more preferably less than 3°C, most preferably less than 1°C.

15. The coating composition according to any preceding claim wherein the polymer particles have a glass transition temperature in the range of from -10 to 25°C, preferably -5 to 20°C, more preferably 0 to 15°C, as determined by differential scanning calorimetry according to ISO 16805.

## Patentansprüche

1. Beschichtungszusammensetzung auf Wasserbasis, umfassend:
A. ein Pigment; und
B. eine wäßrige Polymerdispersion, hergestellt durch radikalische wäßrige Emulsionspolymerisation eines Gemisches, das, bezogen auf die Gesamtmenge der Monomere, i) 20 bis 79,95 Gewichtsteile mindestens eines ersten Monomers, dessen Homopolymer eine Glasübergangstemperatur Tg <25°C aufweist, ii) 20 bis 79,95 Gewichtsteile mindestens eines zweiten Monomers, dessen Homopolymer eine Glasübergangstemperatur Tg >25°C aufweist, und iii) 0.05-5 Gewichtsteile mindestens eines hydrolysierbaren Silans der Formel (R¹)ₘSi(R²)ₙ(OR³)₄₋ₘ₋ₙ, mit n = 0-3, m = 0-3 und n+m = 0-3, wobei R¹ und R² unabhängig voneinander aus funktionalisierten oder nicht-funktionalisierten, unverzweigten oder verzweigten Alkenyl-, Alkyl-, Aryl- und Aralkyl-Radikalen ausgewählt sind und R³ aus Acyl (C(O)Z)-Radikalen ausgewählt ist, wobei Z eine substituierte oder unsubstituierte, unverzweigte oder verzweigte Alkyl-, Aryl- oder Aralkylgruppe oder Wasserstoff ist,
wobei die Beschichtungszusammensetzung einen pH-Wert von mindestens 10 aufweist und im Wesentlichen frei von Konservierungsmitteln ist.

2. Beschichtungszusammensetzung nach Anspruch 1, wobei das mindestens eine erste Monomer ausgewählt ist aus Acryl- und Methacrylsäureestern, Olefinen und Vinylestern von C₃ bis C₁₈-Carbonsäuren.

3. Beschichtungszusammensetzung nach Anspruch 1 oder Anspruch 2, wobei das mindestens eine erste Monomer ausgewählt ist aus Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat oder 2-Propylheptylacrylat und Mischungen davon.

4. Beschichtungszusammensetzung nach Anspruch 1 oder Anspruch 2, wobei das mindestens eine erste Monomer ausgewählt ist aus Ethylen, Vinylestern von gesättigten verzweigten Monocarbonsäuren mit 9 bis 11 Kohlenstoffatomen im Säurerest und Mischungen davon.

5. Beschichtungszusammensetzung nach einem der vorhergehenden Ansprüche, wobei das mindestens eine zweite Monomer ausgewählt ist aus Vinylestern von C₁- bis C₂-Carbonsäuren, Methacrylsäureestern, Vinylaromaten, Vinylhalogeniden und Gemischen davon, oder wobei das mindestens eine zweite Monomer ausgewählt ist aus Vinylacetat, Methylmethacrylat, Styrol und Gemischen davon, oder wobei das mindestens eine zweite Monomer Styrol umfasst.

6. Beschichtungszusammensetzung nach einem der vorhergehenden Ansprüche, wobei mindestens einer der Reste R¹ und R² ein Alkyl-, Aryl- oder Aralkyl-Radikal umfasst, das mit einer oder mehreren der folgenden Gruppen funktionalisiert ist: einer Mercaptogruppe, einer Epoxygruppe, einer Aminogruppe und einer Glycidylgruppe.

7. Beschichtungszusammensetzung nach einem der Ansprüche 1 bis 5, wobei mindestens einer der Reste R¹ und R² ein Alkyl-, Aryl- oder Aralkyl-Radikal umfasst, das mit einer Methacryloylgruppe oder einer Acryloxygruppe funktionalisiert ist, oder eine Alkenylgruppe umfasst, oder wobei mindestens einer der Reste R¹ und R² eine Vinylgruppe umfasst.

8. Beschichtungszusammensetzung nach einem der vorhergehenden Ansprüche, wobei Z eine aliphatische C₁-C₃-Gruppe umfasst.

9. Beschichtungszusammensetzung nach einem der vorhergehenden Ansprüche, wobei n+m = 1.

10. Beschichtungszusammensetzung nach einem der vorhergehenden Ansprüche, wobei das mindestens eine hydrolysierbare Silan Vinyltriacetoxysilan umfasst.

11. Beschichtungszusammensetzung nach einem der vorhergehenden Ansprüche, wobei das Gemisch ferner (iv) 0.05 bis 10 Gew.-%, vorzugsweise 0.2 bis 3 Gew.-%, einer oder mehrerer ethylenisch ungesättigten, epoxidhaltigen Verbindungen enthält.

12. Beschichtungszusammensetzung nach einem der vorhergehenden Ansprüche, wobei das Gemisch außerdem (v) eine stabilisierende Monomerkombination enthält, die mindestens eine ethylenisch ungesättigte Sulfonsäure oder ein Salz davon und mindestens eine ethylenisch ungesättigte C₃-C₈-Monocarbonsäure und/oder ethylenisch ungesättigte C₄-C₈-Dicarbonsäure oder ein Anhydrid, vorzugsweise zusammen mit mindestens einem ethylenisch ungesättigten Carbonsäureamid, umfasst.

13. Beschichtungszusammensetzung nach einem der vorhergehenden Ansprüche, die einen pH-Wert von mindestens 10.5, vorzugsweise mindestens 11, aufweist.

14. Beschichtungszusammensetzung nach einem der vorhergehenden Ansprüche mit einer Mindestfilmbildungstemperatur (MFFT) von weniger als 10°C, vorzugsweise weniger als 6°C, noch bevorzugter weniger als 3°C, am meisten bevorzugt weniger als 1°C.

15. Beschichtungszusammensetzung nach einem der vorhergehenden Ansprüche, wobei die Polymerteilchen eine Glasübergangstemperatur im Bereich von -10 bis 25°C, vorzugsweise -5 bis 20°C, besonders bevorzugt 0 bis 15°C, haben, bestimmt durch Differentialscanningkalorimetrie gemäß ISO 16805.

## Revendications

1. Composition de revêtement à base d'eau comprenant :
A. un pigment ; et
B. une dispersion aqueuse de polymère produite par polymérisation aqueuse radicalaire
d'un mélange comprenant, par rapport à la quantité totale de monomères, i) 20 à 79,95 parties en poids d'au moins un premier monomère dont l'homopolymère a une température de transition vitreuse Tg < 25 °C, ii) 20 à 79,95 parties en poids d'au moins un deuxième monomère dont l'homopolymère a une température de transition vitreuse T> 25 °C, et iii) 0,05 à 5 parties en poids d'au moins un silane hydrolysable de formule (R¹)ₘSi(R²)ₙ(OR³)₄₋ₘ₋ₙ, avec n = 0-3, m = 0-3 et n+m = 0-3, R¹ et R² étant choisis indépendamment parmi des radicaux alcényle, alkyle, aryle et aralkyle fonctionnalisés ou non fonctionnalisés, ramifiés ou non ramifiés, et R³ étant choisis parmi des radicaux acyle (C(O)Z), où Z est un groupe alkyle, aryle ou aralkyle substitué ou non substitué, ramifié ou non ramifié, ou un atome d'hydrogène, dans laquelle la composition de revêtement a un pH d'au moins 10 et est pratiquement exempte de conservateurs.

2. La composition de revêtement selon la revendication 1, dans laquelle le au moins un premier monomère est choisi parmi les esters d'acide acrylique et méthacrylique, les oléfines et les esters vinyliques d'acides carboxyliques en C₃ à C₁₈.

3. Composition de revêtement selon la revendication 1 ou la revendication 2, dans laquelle le au moins un premier monomère est choisi parmi l'acrylate d'éthyle, l'acrylate de n-propyle, l'acrylate de n-butyle, l' l'acrylate d'isobutyle, l'acrylate de sec-butyle, l'acrylate de n-hexyle, l'acrylate de 2-éthylhexyle, le méthacrylate de n-hexyle, le méthacrylate de 2-éthylhexyle ou l'acrylate de 2-propylheptyle, et leurs mélanges.

4. Composition de revêtement selon la revendication 1 ou la revendication 2, dans laquelle le au moins un premier monomère est choisi parmi l'éthylène, les esters vinyliques d'acides monocarboxyliques saturés ramifiés ayant de 9 à 11 atomes de carbone dans le radical acide, et leurs mélanges.

5. Composition de revêtement selon l'une quelconque des revendications précédentes, dans laquelle le au moins un deuxième monomère est choisi parmi les esters vinyliques d'acides carboxyliques en Cᵢ à C₂, les esters d'acide méthacrylique, les composés vinylaromatiques, les halogénures de vinyle et leurs mélanges, ou dans laquelle le au moins un deuxième monomère est choisi parmi l'acétate de vinyle, le méthacrylate de méthyle, le styrène et leurs mélanges, ou dans laquelle le au moins un deuxième monomère comprend le styrène.

6. Composition de revêtement selon l'une quelconque des revendications précédentes, dans laquelle au moins l'un des radicaux R₁ et R₂ comprend un radical alkyle, aryle ou aralkyle fonctionnalisé avec un ou plusieurs groupes mercapto, époxy, amino et glycidyle.

7. Composition de revêtement selon l'une quelconque des revendications 1 à 5, dans laquelle au moins l'un des radicaux R₁ et R₂ comprend un radical alkyle, aryle ou aralkyle fonctionnalisé avec un groupe méthacryloyle ou un groupe acryloxy ou comprend un groupe alcényle, ou dans laquelle au moins l'un des radicaux R₁ et R₂ comprend un groupe vinyle.

8. Composition de revêtement selon l'une quelconque des revendications précédentes, dans laquelle Z comprend un groupe aliphatique en C₁-C₃.

9. Composition de revêtement selon l'une quelconque des revendications précédentes, dans laquelle n+m = 1.

10. Composition de revêtement selon l'une quelconque des revendications précédentes, dans laquelle le ou les silanes hydrolysables comprennent du vinyl triacétoxysilane.

11. Composition de revêtement selon l'une quelconque des revendications précédentes, dans laquelle le mélange comprend en outre (iv) de 0,05 à 10 %, de préférence de 0,2 à 3 %, en poids, d'un ou plusieurs composés époxydiques éthyléniquement insaturés.

12. Composition de revêtement selon l'une quelconque des revendications précédentes, dans laquelle le mélange comprend en outre (v) une combinaison de monomères stabilisants comprenant au moins un acide sulfonique éthyléniquement insaturé ou un sel de celui-ci et au moins un acide monocarboxylique en C₃-C₈ éthyléniquement insaturé et/ou un acide dicarboxylique en C₄-C₈ éthyléniquement insaturé ou un anhydride, de préférence avec au moins un amide carboxylique éthyléniquement insaturé.

13. Composition de revêtement selon l'une quelconque des revendications précédentes et ayant un pH d'au moins 10,5, de préférence d'au moins 11.

14. Composition de revêtement selon l'une quelconque des revendications précédentes et ayant une température minimale de formation de film (MFFT) inférieure à 10 °C, de préférence inférieure à 6 °C, plus préférablement inférieure à 3 °C, plus préférablement encore inférieure à 1 °C.

15. Composition de revêtement selon l'une quelconque des revendications précédentes, dans laquelle les particules de polymère ont une température de transition vitreuse comprise dans la plage de -10 à 25 °C, de préférence de -5 à 20 °C, plus préférablement de 0 à 15 °C, telle que déterminée par analyse calorimétrique différentielle selon la norme ISO 16805.
